Europäisches Patentamt

European Patent Office

Office européen des brevets

(11) Veröffentlichungsnummer: **0 335 303**
**A2**

## EUROPÄISCHE PATENTANMELDUNG

(21) Anmeldenummer: **89105391.0**

(22) Anmeldetag: **27.03.89**

(51) Int. Cl.⁴: **G01S 1/02 , G01S 1/56**

(30) Priorität: **29.03.88 DE 3810628**

(43) Veröffentlichungstag der Anmeldung:
**04.10.89 Patentblatt 89/40**

(84) Benannte Vertragsstaaten:
**BE DE ES FR GB IT NL**

(71) Anmelder: **Standard Elektrik Lorenz
Aktiengesellschaft
Lorenzstrasse 10
D-7000 Stuttgart 40(DE)**

(72) Erfinder: **Kleiber, Herbert
George-Kropp-Strasse 19
D-7140 Ludwigsburg(DE)**

(74) Vertreter: **Brose, Gerhard et al
Standard Elektrik Lorenz AG Patent- und
Lizenzwesen Postfach 30 09 29
D-7000 Stuttgart 30(DE)**

(54) Sendestation für ein Navigationssystem mit Haupt- und Reservesender, insbesondere Sendestation für das Mikrowellen-Landesystem MLS.

(57) Gemäß der Erfindung wird bei einer Sendestation für ein Navigationssystem mit duplizierten Sendern (20A,B) die üblicherweise vorhandene Kunstlast, die anstelle des Antennensystems den jeweils in aktiver Reserve stehenden Sender abschließt, samt dem zugehörigen hochwertigen Umschalter weggelassen. Stattdessen werden die beiden Sender in stetigem Wechsel betrieben. Damit wird mit weniger Aufwand eine bessere Überwachung möglich.

FIG.1

EP 0 335 303 A2

## Sendestation für ein Navigationssystem mit Haupt- und Reservesender, insbesondere Sendestation für das Mikrowellen-Landesystem MLS

Die Erfindung betrifft eine Sendestation für ein Navigationssystem, insbesondere eine Sendestation für das Mikrowellen-Landesystem MLS.

Die Ausrüstung einer Start- und Landebahn für das Mikrowellen-Landesystem weist je nach Ausführung etwa vier Sendestationen auf, die in bestimmter Weise um die Landebahn verteilt sind und in vorgegebener zeitlicher Folge auf derselben Frequenz senden. Jede Sendestation weist unter anderem einen Haupt- und einen Reservesender, einen Antennenumschalter und verschiedene Antennen auf, wobei die Aufteilung zwischen den einzelnen Antennen für die vorliegende Erfindung unberücksichtigt bleiben kann. Zur Erhöhung der Sicherheit werden dann häufig die duplizierten Einrichtungen gleichzeitig betrieben und beide für sich überwacht. Die Leistungsausgänge müssen dann einerseits zur Last hin und andererseits zu einer Kunstlast hin umschaltbar und andererseits ausreichend voneinander isoliert sein. Die hierfür erforderliche Kunstlast muß in gleicher Weise wie die eigentlich zu versorgende Last an die Leistungsausgänge angepaßt sein und muß auch in der Lage sein, dieselbe Leistung aufzunehmen. Außerdem tritt ein unnötig hoher Energieverbrauch auf. Eine solche Sendestation ist, wenn auch nicht für das Mikrowellen-Landesystem, aus G. Bertocchi, Elektrisches Nachrichtenwesen, Band 58, Nr. 3, 1984, Seiten 289-292, insbesondere Bild 1 mit zugehöriger Beschreibung, bekannt.

Der Erfindung liegt die Aufgabe zugrunde, eine Sendestation für ein Navigationssystem anzugeben, die auf einfachere Weise, aber dennoch gleich wirksam überwacht werden kann.

Diese Aufgabe wird gelöst durch eine Sendestation nach der Lehre des Hauptanspruchs. Gemäß der Erfindung wird also bei einer Sendestation für ein Navigationssystem mit duplizierten Sendern die üblicherweise vorhandene Kunstlast, die anstelle des Antennensystems den jeweils in aktiver Reserve stehenden Sender abschließt, samt dem zugehörigen hochwertigen Umschalter weggelassen. Stattdessen werden die beiden Sender in stetigem Wechsel betrieben. Damit wird mit weniger Aufwand eine bessere Überwachung möglich.

Weitere Ausgestaltungen der Erfindung sind den Unteransprüchen zu entnehmen.

Die Erfindung wird im folgenden anhand eines Ausführungsbeispiels unter Zuhilfenahme der beiliegenden Zeichnungen weiter erläutert.

Fig. 1 zeigt eine Sendestation für das Mikrowellen-Landesystem MLS gemäß der Erfindung.

Fig. 2 zeigt einen Antennenumschalter für die Sendestation nach Fig. 1.

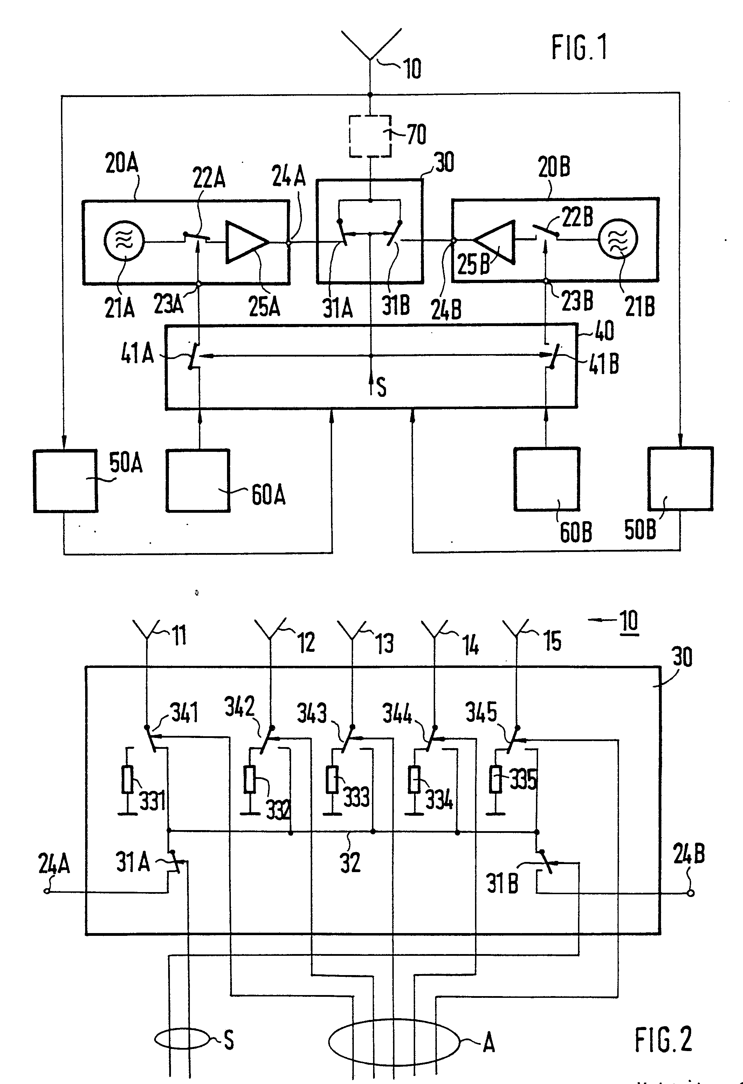

Die in Fig. 1 in starker Vereinfachung dargestellte Sendestation weist ein Antennensystem 10, hier als Einzelantenne dargestellt, zwei gleichartige Sender 20A und 20B, einen Antennenumschalter 30, eine Steuereinrichtung 40, zwei gleichartige Überwachungseinrichtungen 50A und 50B und zwei gleichartige Signalgeneratoren 60A und 60B auf. Die Sender 20A und 20B sind hier nicht so dargestellt, wie sie tatsächlich aufgebaut sind, sondern so, wie sie nach außen wirken. Der tatsächliche Aufbau eines solchen Senders ist aber dem Fachmann geläufig. Je ein Hochfrequenzgenerator 21A und 21B wirkt auf einen Leistungsverstärker 25A bzw. 25B, der über einen Leistungsausgang 24A bzw. 24B Hochfrequenzleistung in Richtung zum Antennensystem 10 abgibt. Je ein Schalter 22A und 22B zwischen Hochfrequenzgenerator 21A bzw. 21B und Leistungsverstärker 25A bzw. 25B dient der Ein-Aus-Tastung der Senderausgangsleistung. Diese Tastung erfolgt durch ein an einem Signaleingang 23A bzw. 23B anliegendes digitales Signal.

Der Antennenumschalter 30 verbindet entweder über einen Schalter 31A den Leistungsausgang 24A des Senders 20A mit dem Antennensystem 10 oder über einen Schalter 31B den Leistungsausgang 24B des Senders 20B. Die Umschaltung wird gesteuert durch ein von außen kommendes Signal S. Beim Stand der Technik ist hier noch ein zweites Schalterpaar erforderlich, das den Ausgang des jeweils nicht zum Antennensystem 10 durchgeschalteten, aber dennoch aktiven Senders zu einer Kunstlast hin durchschaltet, wobei aus den eingangs genannten Gründen an dieser Stelle ein sehr hochwertiger Koaxialumschalter erforderlich ist. Der Antennenumschalter 30 könnte bei der erfindungsgemäßen Ausgestaltung sogar ganz weggelassen und die Leistungsausgänge 24A und 24B direkt zusammengeschaltet werden, wenn durch geeignete Auslegung der Senderausgänge und richtig gewählte Leitungslängen erreicht wird, daß der jeweils ausgetastete Sender die Anpassung des anderen Senders an das Antennensystem nicht beeinflußt.

Dem jeweils aktiven Sender 20A oder 20B wird über seinen Signaleingang 23A bzw. 23B dasjenige digitale Signal zugeführt, mit dem die ausgestrahlte Leistung getastet sein soll. Dieses Signal könnte von einer gemeinsamen Signalquelle kommen, wird aber im vorliegenden Beispiel wiederum aus Sicherheits- und Zuverlässigkeitsgründen in den beiden sich gegenseitig duplizierenden Signalgeneratoren 60A und 60B erzeugt. Beide liefern im fehlerfreien Betrieb ständig das gleiche Ausgangssignal, wenn auch nicht unbedingt exakt aufeinander synchronisiert. Im Falle des Mikrowellen-Landesystems MLS sind die Signalgeneratoren aller beteiligten Sendestationen untereinander verbunden.

Erfindungsgemäß sind nun die Ausgänge der Signalgeneratoren 60A und 60B nicht direkt, sondern über die Steuereinrichtung 40 mit den Signaleingängen 23A und 23B der Sender 20A und 20B verbunden. Die Steuereinrichtung 40 enthält zwei Schalter 41A und 41B, über die entweder der Signalgenerator 60A mit dem Signaleingang 23A des Senders 20A oder der Signalgenerator 60B mit dem Signaleingang 23B des Senders 20B verbunden werden kann. Die Schalter 41A und 41B werden hier durch das gleiche Signal S beeinflußt, durch das auch die Schalter 31A und 31B im Antennenumschalter 30 beeinflußt werden. Im Normalfall, d.h. im fehlerfreien Betrieb, wird nun durch das Signal S und die Schalter 41A und 41B in regelmäßigem Wechsel zwischen den sich duplizierenden Einrichtungen hin- und hergeschaltet.

Die einzelnen Intervalle müssen so lang sein, daß hinsichtlich aller Eigenschaften, also auch im Hinblick auf die Erwärmung des Geräts und die Belastung der Spannungsquellen, derselbe Zustand erreicht wird wie beim Betrieb nur eines Geräts. Beim Mikrowellen-Landesystem MLS sind die einzelnen Sendestationen innerhalb eines Zeitrahmens von 75 s-6 ein- bis dreimal während etwa 7 bis 10 s-6 aktiv. Ein regelmäßiger, durch die Steuereinrichtung 40 ausgelöster Wechsel nach jeweils 75 s-6 würde damit ausreichen, um die Sender 20A und 20B laufend zu überwachen. Diese Zeitrahmen mit etwa 75 s-6 sind in einen Ablauf eingebunden, der sich etwa alle 600 s-3 wiederholt. Um auch die Signalgeneratoren 60A und 60B in die Überwachung voll miteinbeziehen zu können, wird vorteilhafterweise die Umschaltung in der Steuereinrichtung 40 an diesen Ablauf mit 600 s-3 gekoppelt. Hierzu muß die Steuereinrichtung 40, ebenso wie die Signalgeneratoren 60A und 60B mit den übrigen Sendestationen verbunden sein. Dies ist in der vorliegenden Zeichnung nicht berücksichtigt.

Die Umschaltung kann nicht nur an der anhand der Fig.1 beschriebenen Stelle, sondern an jeder beliebigen Stelle erfolgen, von der aus, direkt oder indirekt, die Senderausgangsleistung getaktet werden kann. Dies kann sowohl innerhalb der Sender 20A und 20B, als auch innerhalb der Signalgeneratoren 60A und 60B erfolgen. Auch ist nicht erforderlich, daß, wie hier gezeigt, auch die Signalgeneratoren 60A und 60B dupliziert sind. Andererseits ist es aber bei duplizierten Signalgeneratoren auch denkbar, im Fehlerfall versuchsweise Signalgeneratoren und Sender über Kreuz miteinander zu verbinden, um so einerseits den Fehler einzugrenzen und andererseits die Zuverlässigkeit und Sicherheit im Hinblick auf zwei gleichzeitig auftretende Fehler noch etwas zu erhöhen. Hierzu müßte die Steuereinrichtung 40 in der Lage sein, den Signalgenerator 60A mit dem Sender 20B oder den Signalgenerator 60B mit dem Sender 20A zu verbinden. Auch Umschaltmöglichkeiten an mehreren Stellen des Signalflusses sind möglich.

Wird der Steuereinrichtung 40 ein Fehler gemeldet, so wird derjenige Teil nicht mehr aktiviert, der als fehlerhaft erkannt wird; der andere Teil übernimmt bis zur erfolgten Reparatur allein den Betrieb. Im vorliegenden Beispiel sind für das Erkennen von Fehlern die beiden untereinander gleichen Überwachungseinrichtungen 50A und 50B vorgesehen. Zwischen ihnen wird nicht umgeschaltet, sie arbeiten also beide gleichzeitig und überwachen sich somit gegenseitig. Beide Überwachungseinrichtungen 50A und 50B sind hier vereinfacht als gemeinsam galvanisch an das Antennensystem 10 angekoppelt gezeichnet. Wichtig jedenfalls ist, daß die Überwachungseinrichtungen 50A und 50B an einer Stelle messen, an der sowohl die Ausgangsleistung des Senders 20A als auch die des Senders 20B meßbar ist. Dies kann beispielsweise über einen Richtkoppler an der Zuleitung zum Antennensystem 10 erfolgen, es kann aber beispielsweise auch durch Empfang im Nah- oder Fernfeld überwacht werden. Wie in dem von G. Bertocchi beschriebenen System sind auch hier zwei Überwachungseinrichtungen vorgesehen. Durch ihre Parallelschaltung überwachen sie sich aber gegenseitig, so daß nicht, wie von G. Bertocchi beschrieben, aufwendige Prozeduren zur Überwachung der Überwachungseinrichtung erforderlich sind. Andererseits könnte aber auch mit einer nicht duplizierten Überwachungseinrichtung gearbeitet werden, die sich dann aber durch geeignete Prozeduren selbst überwachen müßte. In jedem Fall ist der Aufwand für die Überwachung jedoch deutlich reduziert. Auch die Überwachungseinrichtungen der einzelnen Sendestationen sowie etwaige zentrale Überwachungseinrichtungen sind untereinander verbunden.

In Figur 1 ist in der Zuleitung zum Antennensystem 10 gestrichelt noch ein Endverstärker 70 angedeutet. Oft wird, wie auch in dem Artikel von G. Bertocchi beschrieben, der Sender nur bis zur Treiberstufe hin dupliziert. Eine Duplizierung des Endverstärkers kann dann entfallen, wenn der Endverstärker aus mehreren gleichen, parallel geschalteten Verstärkern besteht, die so miteinander verschaltet sind, daß der Ausfall eines Verstärkers die übrigen Verstärker nicht beeinflußt und nur die Gesamtleistung sich reduziert. Bei MLS ist ein solcher Endverstärker nicht vorgesehen.

Fig. 2 zeigt, wie schon angedeutet, daß bei einer erfindungsgemäß ausgestalteten Sendestation auch der Antennenumschalter 30 sehr einfach aufgebaut sein kann. Sowohl die Leistungsausgänge 24A und 24B der beiden Sender als auch die Zuleitungen zum Antennensystem 10 können hier über einfache Schalter auf einen Sternpunkt 32 geführt werden. Im Beispiel erfolgt dies einerseits durch die bereits genannten Schalter 31A und 31B, andererseits durch fünf Umschalter 341 bis 345, durch die fünf Antennen 11 bis 15, die das Antennensystem 10 bilden, wahlweise an den Sternpunkt 32 oder über Abschlußwiderstände 331 bis 335 an Masse gelegt werden können. Alle Schalter und Umschalter können hier, sofern die Leistung nicht zu groß ist, durch einfache und räumlich nahe beieinanderliegende PIN-Diodenschalter realisiert werden. Beim Stand der Technik sind zumindest für die Umschaltung zwischen den Leistungsausgängen hochwertige Koaxialschalter erforderlich, was zwangsläufig auch eine räumliche Trennung von den Umschaltern für die einzelnen Antennen zur Folge hat. Die Realisierung von Schaltern und Umschaltern in PIN-Diodentechnik ist dem Fachmann geläufig. Die Ansteuerung der Schalter und Umschalter, die über Gleichstrompfade erfolgt, ist hier nur angedeutet. Die Schalter 31A und 31B werden vom Signal S angesteuert, die Umschalter 341 bis 345 von einem Signal A, dessen Herkunft in Fig. 1 nicht dargestellt ist.

**Ansprüche**

1. Sendesstation für ein Navigationssystem, insbesondere für das Mikrowellen-Landesystem MLS (Microwave Landing System), mit einem ersten Sender (20A) mit einem Leistungsausgang (24A) und einem Steuereingang (23A), über den die Leistung am Leistungsausgang abschaltbar ist, mit einem zweiten gleichartigen Sender (20B), durch den der erste Sender (20A) aus Zuverlässigkeitsgründen dupliziert wird und der ebenfalls einen Leistungsausgang (24B) aufweist und einen Steuereingang (23B), über den die Leistung am Leistungsausgang (24B) abschaltbar ist, mit einem Antennensystem (10), das sowohl vom ersten Sender (20A) als auch vom zweiten Sender (20B) gespeist werden kann, mit einer Überwachungseinrichtung (50A,B), die das Ausgangssignal überwacht und im Fehlerfall eine Fehlermeldung abgibt, und mit einer Steuereinrichtung (40), mit zwei Ausgängen, die mit den genannten Steuereingängen (23A,B) verbunden sind und die einen Eingang aufweist, über den die Fehlermeldung zuführbar ist, die beim Ausbleiben einer Fehlermeldung den ersten und zweiten Sender (20A,B) in stetigem Wechsel zur Abgabe von Leistung veranlaßt und die beim Vorliegen einer Fehlermeldung ständig den nicht als fehlerhaft erkannten Sender zur Abgabe von Leistung veranlaßt.

2. Sendestation nach Anspruch 1, dadurch gekennzeichnet, daß der stetige Wechsel zwischen erstem und zweitem Sender zu Zeiten erfolgt, zu denen aus anderen Gründen gerade keine Leistung abgegeben wird.

3. Sendestation nach Anspruch 1, dadurch gekennzeichnet, daß zwischen die Leistungsausgänge (24A,B) und das Antennensystem (10) ein Umschalter (30) eingefügt ist, der von der Steuereinrichtung (40) aus mitgesteuert wird und der den jeweils gerade nicht aktivierten Sender und die zugehörige Stichleitung abtrennt.

4. Sendestation nach Anspruch 3, dadurch gekennzeichnet, daß der Umschalter (30) ein PIN-Dioden-Umschalter ist.

P 38 10 628.0

FIG.1

FIG.2

H. Kleiber 9
25.3.88